# EUROPÄISCHE PATENTANMELDUNG

(11) **EP 2 813 394 A1**
(43) Veröffentlichungstag der Anmeldung: **17.12.2014**
(21) Anmeldenummer: 13171985.8
(22) Anmeldetag: 14.06.2013
(51) Int. Cl.: B60P 3/36

(54) **Innenausbauvorrichtung**

(71) Anmelder: Carthago Reisemobilbau GmbH, 88326 Aulendorf (DE)
(72) Erfinder: Schuler, Karl-Heinz, 88255 Köpfingen über Baienfurt (DE)
(74) Vertreter: Daub, Thomas

(57) **Zusammenfassung**

Innenausbauvorrichtung, insbesondere für einen Wohnwagen und/oder für ein Wohnmobil, die einen ersten Bereich (10), einen zweiten Bereich (12), zumindest eine Türe (14) und zumindest ein Wandsegment (16) aufweist, wobei das zumindest eine Wandsegment (16) und die zumindest eine Türe (14) den ersten Bereich (10) in zumindest einer ersten Konfiguration vom zweiten Bereich (12) trennen.

Es wird vorgeschlagen, dass das zumindest eine Wandsegment (16) zur Herstellung zumindest einer zweiten Konfiguration beweglich ausgebildet ist.

## Beschreibung

### Stand der Technik

Die Erfindung betrifft eine Innenausbauvorrichtung nach dem Oberbegriff des Anspruchs 1.

Es ist bereits eine Innenausbauvorrichtung, insbesondere für einen Wohnwagen und/oder für ein Wohnmobil, bekannt, die einen ersten Bereich, einen zweiten Bereich, zumindest eine Türe und zumindest ein Wandsegment aufweist, wobei das zumindest eine Wandsegment und die zumindest eine Türe den ersten Bereich in zumindest einer ersten Konfiguration vom zweiten Bereich trennen.

Derartige Innenausbauvorrichtungen finden sich insbesondere in Wohnwagen und/oder in Wohnmobilen. Das Wandsegment ist fest innerhalb der Innenausbauvorrichtung angeordnet. Bei geschlossener Türe grenzt das Wandsegment direkt an die Türe an. Durch ein Öffnen der Türe kann sich eine Person vom ersten Bereich, beispielsweise einem Durchgangsbereich, in den zweiten Bereich, beispielsweise einen Sanitärbereich, beziehungsweise vom zweiten Bereich in den ersten Bereich bewegen. Eine Person hält sich zum Aus-und/oder Ankleiden bevorzugt innerhalb des vor ungewünschten Einblicken geschützten Sanitärbereichs auf.

Eine Bewegungsfreiheit, insbesondere zum komfortablen Aus- und/oder Ankleiden, ist aufgrund eines begrenzten Raumangebots innerhalb des zweiten Bereichs auch bei teilweise geöffneter Türe stark eingeschränkt. Eine besondere Einschränkung muss insbesondere hingenommen werden, wenn der zweite Bereich ein Kombibad enthält, welches sowohl eine Dusche als auch eine Toilette aufweist. Ferner weisen vor allem Innenausbauvorrichtungen für Wohnwagen und/oder Wohnmobile einen sehr begrenzten Bewegungsfreiraum auf.

Die Aufgabe der Erfindung besteht insbesondere darin, eine gattungsgemäße Innenausbauvorrichtung mit einer vergrößerten Bewegungsfreiheit, insbesondere zum Aus- und/oder Ankleiden, bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einer Innenausbauvorrichtung, insbesondere für einen Wohnwagen und/oder für ein Wohnmobil, die einen ersten Bereich, einen zweiten Bereich, zumindest eine Türe und zumindest ein Wandsegment aufweist, wobei das zumindest eine Wandsegment und die zumindest eine Türe den ersten Bereich in zumindest einer ersten Konfiguration vom zweiten Bereich trennen.

Es wird vorgeschlagen, dass das zumindest eine Wandsegment zur Herstellung zumindest einer zweiten Konfiguration beweglich ausgebildet ist, wodurch ein Platzangebot beziehungsweise eine Bewegungsfreiheit, insbesondere zum Aus-und/oder Ankleiden, vergrößert werden kann. Unter einem "Bereich" soll in diesem Zusammenhang insbesondere eine begrenzte Fläche und/oder ein begrenzter Raum verstanden werden. Insbesondere ist der Bereich zur Bereitstellung einer bestimmten Funktion vorgesehen. Vorteilhaft ist der Bereich zumindest teilweise durch zumindest eine Wandung und/oder durch zumindest eine Türe begrenzt. Bevorzugt ist der erste Bereich von einem Durchgangsbereich gebildet. Weiterhin vorteilhaft ist der zweite Bereich von einem Sanitärbereich gebildet. Unter einem "Wandsegment" soll in diesem Zusammenhang insbesondere ein Teilabschnitt einer Wand und/oder einer Wandung verstanden werden. Das Wandsegment ist insbesondere mit einer Wandung verbunden, welche mit einem Innenausbauboden fest und unbeweglich verbunden ist. Bevorzugt ist das Wandsegment in einer Verriegelungsposition verriegelbar. Besonders bevorzugt ist das Wandsegment mit einem Innenausbauboden und/oder einer Innenausbaudecke verriegelbar. Zum Betreten des zweiten Bereichs aus dem ersten Bereich kann das Wandsegment in seiner Verriegelungsposition verbleiben. Unter einer "Konfiguration" soll in diesem Zusammenhang insbesondere eine Stellung von zumindest einem Innenausbauteil, insbesondere dem Wandsegment und/oder der Türe, zur Erzielung einer bestimmten Nutzungsfunktion der Innenausbauvorrichtung verstanden werden. Vorteilhaft umfasst die zumindest eine erste Konfiguration eine Sanitärkonfiguration. Weiterhin vorteilhaft umfasst die zumindest eine zweite Konfiguration eine Ankleidekonfiguration. Unter einer "Sanitärkonfiguration" soll in diesem Zusammenhang insbesondere eine Konfiguration verstanden werden, die dazu vorgesehen ist, einen Sanitärbereich zumindest im Wesentlichen von einer Umgebung abzutrennen beziehungsweise abzuschließen. Bevorzugt ist die zumindest eine Türe in der ersten Konfiguration geschlossen. Weiterhin vorteilhaft ist das Wandsegment in der ersten Konfiguration verriegelt. In einer zusätzlichen Ausgestaltung wird vorgeschlagen, dass das Wandsegment ausschließlich dann entriegelbar ist, wenn die Türe geöffnet ist. Unter einem "Sanitärbereich" soll in diesem Zusammenhang insbesondere ein Bereich verstanden werden, der zumindest eine sanitäre Einrichtung, wie insbesondere eine Dusche und/oder eine Toilette, für einen Benutzer umfasst. Unter einem "Durchgangsbereich" soll in diesem Zusammenhang insbesondere ein Bereich verstanden werden, der dazu vorgesehen ist, einen Durchgang für eine Person zu bilden. Insbesondere ist der Durchgangsbereich dazu vorgesehen, einen Bereich zu bilden, der dazu vorgesehen ist, einen Durchgang zwischen einem Wohnbereich und einem Schlafbereich bereitzustellen. Unter einer "Ankleidekonfiguration" soll in diesem Zusammenhang insbesondere eine Konfiguration verstanden werden, die einen Ankleidebereich ausbildet, der dazu vorgesehen ist, ein Platzangebot beziehungsweise eine Bewegungsfreiheit zum Aus- oder Ankleiden, insbesondere zum komfortablen Aus- oder Ankleiden für eine erwachsene Person, bereitzustellen. Bevorzugt ist der Ankleidebereich zu einer Umgebung hin blickdicht ausgebildet. Insbesondere sind der Sanitärbereich und der Durchgangsbereich in der zumindest einen zweiten Konfiguration zumindest in einem Verriegelungsbereich des zumindest einen Wandsegments miteinander verbunden. Unter einem "Verriegelungsbereich" soll in diesem Zusammenhang insbesondere ein Bereich eines Elements verstanden werden, in dem das Element in einer Verriegelungsposition angeordnet ist. Unter "beweglich" soll in diesem Zusammenhang insbesondere zumindest teilweise verschiebbar, zumindest teilweise makroskopisch verbiegbar und/oder bevorzugt zumindest teilweise schwenkbar, insbesondere relativ zu einem Innenausbauboden verstanden werden. Vorteilhaft weist die Türe eine Türbreite von zumindest 40 cm, bevorzugt von zumindest 50 cm, besonders bevorzugt von zumindest 60 cm auf. Unter "vorgesehen" soll in diesem Zusammenhang insbesondere speziell ausgebildet, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs-und/oder Betriebszustand erfüllt und/oder ausführt.

In einer weiteren Ausgestaltung wird vorgeschlagen, dass das zumindest eine Wandsegment in der zumindest einen ersten Konfiguration mit der zumindest einen Türe verbunden ist, wodurch der zweite Bereich in der ersten Konfiguration vorteilhaft blickdicht zum ersten Bereich ausgebildet werden kann.

Ferner wird vorgeschlagen, dass das zumindest eine Wandsegment zumindest ein Schließstück umfasst, das zur Aufnahme eines Verriegelungselements der zumindest einen Türe vorgesehen ist, wodurch eine besonders sichere Beibehaltung der ersten Konfiguration erzielt werden kann. Unter einem "Schließstück" soll in diesem Zusammenhang insbesondere ein Schließblech, eine Schließleiste und/oder ein anderes Schließbauteil verstanden werden, das zu einer formschlüssigen Verbindung mit einem Verriegelungselement vorgesehen ist. Unter einem "Verriegelungselement" soll in diesem Zusammenhang insbesondere eine Türfalle und/oder ein Türriegel verstanden werden.

Des Weiteren wird vorgeschlagen, dass das zumindest eine Wandsegment eine Wandsegmentbreite von maximal 40 cm umfasst, wodurch eine besonders kompakte Ausgestaltung bei ausreichendem Platzangebot erzielt werden kann. Zusätzlich wird vorgeschlagen, dass das zumindest eine Wandsegment eine Wandsegmentbreite von maximal 30 cm, bevorzugt von maximal 20 cm aufweist. Vorteilhaft ist die Türbreite mehr als doppelt so groß wie die Wandsegmentbreite. Besonders vorteilhaft ist die Türbreite mehr als dreimal so groß wie die Wandsegmentbreite. Unter einer "Wandsegmentbreite" soll in diesem Zusammenhang insbesondere eine Breite eines Wandsegments verstanden werden. Die Wandsegmentbreite verläuft dabei insbesondere senkrecht zu einer Wandsegmentlängserstreckung und senkrecht zu einer Wandsegmentdicke. Unter einer "Wandsegmentlängserstreckung" soll in diesem Zusammenhang insbesondere eine maximale Längserstreckung beziehungsweise Kantenlänge des Wandsegments verstanden werden.

Eine besonders einfache konstruktive Ausgestaltung der Innenausbauvorrichtung kann erreicht werden, wenn das zumindest eine Wandsegment schwenkbar ausgebildet ist. Insbesondere ist das zumindest eine Wandsegment um eine Schwenkachse schwenkbar gelagert, die senkrecht zu einem Innenausbauboden verläuft.

Ist das zumindest eine Wandsegment in der zumindest einen zweiten Konfiguration zumindest zum Großteil innerhalb des zweiten Bereichs angeordnet, kann ein besonders großes Platzangebot zum Aus- und/oder Ankleiden erzielt werden. Bevorzugt ist das zumindest eine Wandsegment in der zumindest einen zweiten Konfiguration vollständig innerhalb des zweiten Bereichs angeordnet. Unter einem "Großteil" soll in diesem Zusammenhang insbesondere mehr als 50 %, bevorzugt mehr als 80 %, besonders bevorzugt mehr als 95 %, insbesondere bezogen auf eine Grundrissfläche, verstanden werden.

Ferner wird vorgeschlagen, dass die zumindest eine Türe in der zumindest einen zweiten Konfiguration zumindest zum Großteil innerhalb des ersten Bereichs angeordnet ist, wodurch vorteilhaft ein Sichtschutz in Richtung eines Wohnbereichs und/oder eines Schlafbereichs der Innenausbauvorrichtung erzielt werden kann. Bevorzugt ist die zumindest eine Türe in der zumindest einen zweiten Konfiguration vollständig innerhalb des ersten Bereichs angeordnet.

Weist die Innenausbauvorrichtung eine beweglich gelagerte Sichtschutzeinheit auf, die dazu vorgesehen ist, in der zumindest einen zweiten Konfiguration mit der zumindest einen Türe verbunden zu werden, kann eine besonders große Privatsphäre zum Aus- und/oder Ankleiden erzielt werden. Unter einer "Sichtschutzeinheit" soll in diesem Zusammenhang insbesondere eine Einheit verstanden werden, die dazu vorgesehen ist, einen Sichtschutz für zumindest einen Bereich zu erzielen. Insbesondere umfasst die Sichtschutzeinheit zumindest ein Sichtschutzelement, bevorzugt zumindest zwei Sichtschutzelemente. Unter einem "Sichtschutzelement" soll in diesem Zusammenhang insbesondere ein Element verstanden werden, das zumindest einen Vorhang, eine Trennwand und/oder bevorzugt zumindest eine Schiebewand umfasst. Weiterhin vorteilhaft sind zumindest zwei Sichtschutzelemente schwenkbar miteinander verbunden. Zusätzlich wird vorgeschlagen, dass die Sichtschutzeinheit zumindest teilweise verformbar, insbesondere makroskopisch verformbar, ausgebildet ist.

Eine besonders einfache Herstellung der zweiten Konfiguration kann erzielt werden, wenn die Innenausbauvorrichtung zumindest eine Gleitschiene aufweist, in welcher die Sichtschutzeinheit zumindest teilweise verschiebbar gelagert ist. Bevorzugt weist die zumindest eine Gleitschiene zumindest eine Krümmung auf. Zusätzlich wird vorgeschlagen, dass der zweite Bereich ein Kombibad aufweist, wodurch ein besonders funktioneller Sanitärbereich bereitgestellt werden kann.

Unter einem "Kombibad" soll in diesem Zusammenhang insbesondere ein zusammenhängender Sanitärbereich verstanden werden, der zumindest eine Toilette und zumindest eine Dusche beinhaltet. Bevorzugt umfasst das Kombibad ferner zumindest ein Waschbecken.

Ferner wird ein Fahrzeug, insbesondere ein Wohnmobil oder ein Wohnwagen, mit einer erfindungsgemäßen Innenausbauvorrichtung vorgeschlagen. Des Weiteren wird auch ein Kastenwagen mit einer erfindungsgemäßen Innenausbauvorrichtung vorgeschlagen. Prinzipiell ist es in diesem Zusammenhang auch denkbar, die erfindungsgemäße Innenausbauvorrichtung in einem anderen Fahrzeug anzuordnen, wie insbesondere in einem Wasserfahrzeug, einem Schienenfahrzeug und/oder einem Luftfahrzeug. Ebenso ist es in diesem Zusammenhang denkbar, die Innenausstattungsvorrichtung in einer Immobilie anzuordnen, wie insbesondere in einem Mobilheim, einem Appartement und/oder einer Hütte.

Es wird ferner ein Verfahren zur Änderung einer Konfiguration einer Innenausbauvorrichtung vorgeschlagen, wobei ein erster Bereich von einem zweiten Bereich in zumindest einer ersten Konfiguration von zumindest einem Wandsegment und zumindest einer Türe getrennt wird und wobei das zumindest eine Wandsegment zur Herstellung zumindest einer zweiten Konfiguration bewegt wird, wodurch auf einfache Weise ein Platzangebot beziehungsweise eine Bewegungsfreiheit, insbesondere zum Aus- und/oder Ankleiden, vergrößert werden kann.

Die erfindungsgemäße Innenausbauvorrichtung soll hierbei nicht auf die oben beschriebene Anwendung und Ausführungsform beschränkt sein. Insbesondere kann die erfindungsgemäße Innenausbauvorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: einen Grundriss einer Innenausbauvorrichtung in einer ersten Konfiguration und
- Fig. 2: einen Grundriss der Innenausbauvorrichtung in einer zweiten Konfiguration.

### Beschreibung des Ausführungsbeispiels

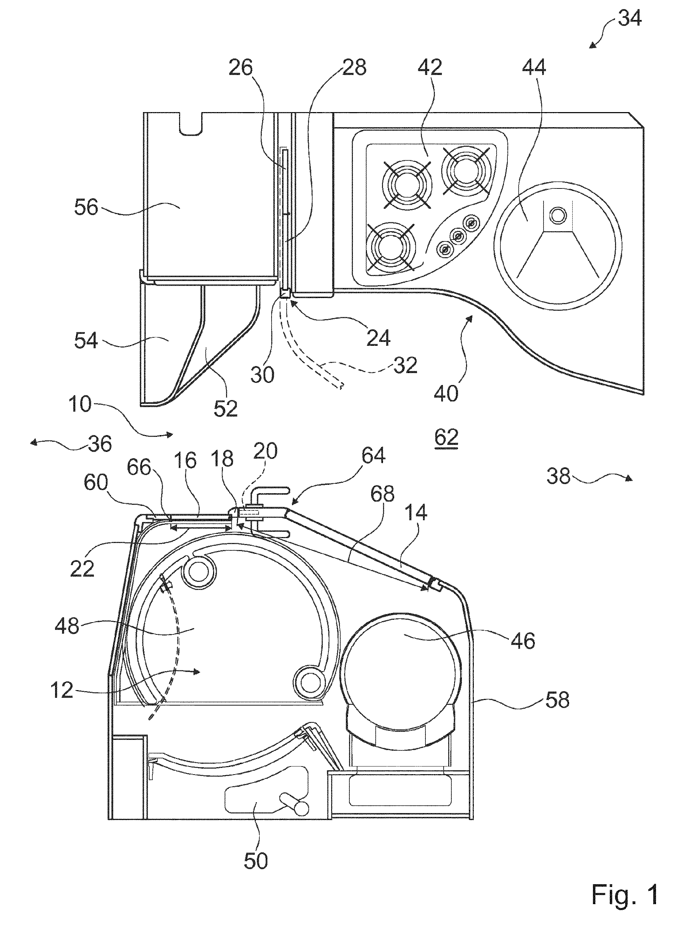

Figur 1 zeigt einen Grundriss einer Innenausbauvorrichtung in einer ersten Konfiguration, die in einem Fahrzeug 34 angeordnet ist. Das Fahrzeug 34 ist von einem Wohnmobil gebildet. Die Innenausbauvorrichtung weist in einem Heckbereich 36 eine nicht näher dargestellte Schlafmöglichkeit auf. In einem dem Heckbereich 36 gegenüberliegenden vorderen Bereich 38 weist die Innenausbauvorrichtung einen Küchenbereich 40 auf. Der Küchenbereich 40 umfasst unter anderem eine Kochstelle 42 und ein Spülbecken 44. An den Küchenbereich 40 schließt sich in Richtung einer Fahrerkabine des Fahrzeugs 34 ein nicht dargestellter Wohnbereich an.

Zwischen dem Heckbereich 36 und dem Küchenbereich 40 weist die Innenausbauvorrichtung einen ersten Bereich 10 auf. Der erste Bereich 10 ist von einem Durchgangsbereich gebildet. Der erste Bereich 10 dient insbesondere zur Bereitstellung einer Durchgangspassage zwischen dem Heckbereich 36 und dem Küchenbereich 40. Der erste Bereich 10 weist zwei Trittstufen 52, 54 auf, die einen Aufstieg zu einem im Heckbereich 36 angeordneten Hochbett ermöglichen. An den Trittstufen 52, 54 schließt sich ein Schrank 56 an.

Die Innenausbauvorrichtung weist ferner einen zweiten Bereich 12 auf. Der zweite Bereich 12 ist von einem Sanitärbereich gebildet. Der zweite Bereich 12 ist zwischen dem Heckbereich 36 und dem Küchenbereich 40 angeordnet. Der zweite Bereich 12 weist ein Kombibad auf. Anders ausgedrückt, weist der zweite Bereich 12 einen zusammenhängenden Sanitärbereich auf, der eine Toilette 46 und eine Dusche 48 beinhaltet. Ferner umfasst der zweite Bereich 12 ein Waschbecken 50.

Die Innenausbauvorrichtung weist eine Türe 14 auf. Die Türe 14 ist schwenkbar an einer Wandung 58 der Innenausbauvorrichtung angeordnet. Die Türe 14 ist in der gezeigten, ersten Konfiguration geschlossen. Die Türe 14 weist in einem Griffbereich 64 einen Knick auf. Genauer gesagt schließen im Griffbereich 64 zwei Flächen der Türe 14 einen Winkel von 26° ein. Die Türe 14 weist eine Türbreite 68 von 60 cm auf.

Die Wandung 58 ist fest an einem Innenausbauboden 62 der Innenausbauvorrichtung angeordnet. Die Wandung 58 trennt den Küchenbereich 40 und/oder den Wohnbereich vom zweiten Bereich 12. Ferner weist die Innenausbauvorrichtung ein Wandsegment 16 auf. Das Wandsegment 16 ist mit einer Wandung 60 verbunden, die fest und unbeweglich mit dem Innenausbauboden 62 verbunden ist. Das Wandsegment 16 ist in der ersten Konfiguration in einer Verriegelungsposition verriegelt. Genauer gesagt ist das Wandsegment 16 in der ersten Konfiguration mit dem Innenausbauboden 62 verriegelt. Das Wandsegment 16 weist eine Wandsegmentbreite 22 von 18 cm auf.

Das Wandsegment 16 ist in der ersten Konfiguration mit der Türe 14 verbunden. Das Wandsegment 16 umfasst ein Schließstück 18. Das Schließstück 18 ist von einer Schließleiste gebildet. Ferner ist das Schließstück 18 zur Aufnahme eines Verriegelungselements 20 der Türe 14 vorgesehen. Das Verriegelungselement 20 ist von einer Türfalle gebildet. Es ist in diesem Zusammenhang jedoch auch denkbar, dass im Wandsegment 16 ein Verriegelungselement und in der Türe 14 ein Schließstück zur Aufnahme des Verriegelungselements angeordnet ist. Ebenfalls ist es denkbar, dass das Verriegelungselement 20 von einem Türriegel gebildet ist.

Wie in der Figur 1 ersichtlich, ermöglicht die Innenraumvorrichtung in der ersten Konfiguration einen Durchgang zwischen dem Heckbereich 36 und dem Küchenbereich 40. Wie gezeigt, umfasst die erste Konfiguration eine Sanitärkonfiguration. Das Wandsegment 16 und die Türe 14 trennen hierbei den ersten Bereich 10 in der ersten Konfiguration vom zweiten Bereich 12. Dadurch ist der zweite Bereich 12 vom ersten Bereich 10 aus nicht einsehbar.

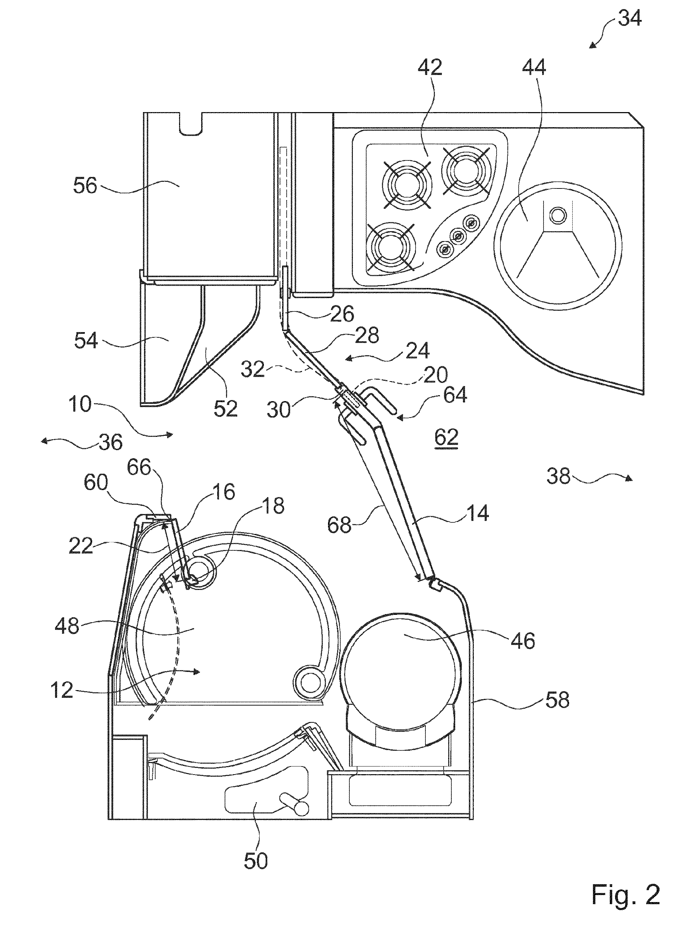

In der Figur 2 ist der Grundriss der Innenausbauvorrichtung in einer zweiten Konfiguration gezeigt. Zur Herstellung der zweiten Konfiguration wird zunächst die Türe 14 geöffnet. Anschließend ist die Türe 14 vollständig innerhalb des ersten Bereichs 10 angeordnet. Zum Betreten des zweiten Bereichs 12 aus dem ersten Bereich 10 oder umgekehrt kann das Wandsegment 16 in seiner beschriebenen Verriegelungsposition verbleiben.

Zur Herstellung der zweiten Konfiguration ist das Wandsegment 16 beweglich ausgebildet. Genauer gesagt ist das Wandsegment 16 schwenkbar ausgebildet. Dabei ist das Wandsegment 16 um eine Schwenkachse schwenkbar gelagert, die senkrecht zum Innenausbauboden 62 verläuft. Das Wandsegment 16 ist an der Wandung 60 über Scharniere 66 schwenkbar gelagert. Zum Schwenken des Wandsegments 16 wird das Wandsegment 16 entriegelt. Das Wandsegment 16 ist ausschließlich dann entriegelbar, wenn die Türe 14 geöffnet ist. Das Wandsegment 16 wird in den zweiten Bereich 12 geschwenkt. Somit ist das Wandsegment 16 in der zweiten Konfiguration vollständig innerhalb des zweiten Bereichs 12 angeordnet. Anders ausgedrückt sind das Wandsegment 16 und die Türe 14 in der zweiten Konfiguration in verschiedenen Bereichen 12, 14 angeordnet.

Die Innenausbauvorrichtung weist ferner eine beweglich gelagerte Sichtschutzeinheit 24 auf. Die Sichtschutzeinheit 24 ist dazu vorgesehen, in der zweiten Konfiguration mit der Türe 14 verbunden zu werden. Die Sichtschutzeinheit 24 weist ein erstes Sichtschutzelement 26 auf. Ferner weist die Sichtschutzeinheit 24 ein zweites Sichtschutzelement 28 auf. Das erste Sichtschutzelement 26 ist schwenkbar mit dem zweiten Sichtschutzelement 28 verbunden. Die Sichtschutzelemente 26, 28 sind von Schiebewänden gebildet.

Die Innenausbauvorrichtung weist eine Gleitschiene 32 auf, in welcher die Sichtschutzeinheit 24 verschiebbar gelagert ist. Die Gleitschiene 32 ist in einer nicht näher gezeigten Innenausbaudecke angeordnet. Es ist in diesem Zusammenhang jedoch auch denkbar, dass die Gleitschiene 32 in dem Innenausbauboden 62 angeordnet ist. Die Gleitschiene 32 weist eine Krümmung auf. Die Gleitschiene 32 ist teilweise zwischen dem Schrank 56 und der Kochstelle 42 angeordnet. Die Sichtschutzelemente 26, 28 erstrecken sich vom Innenausbauboden 62 bis zur Innenausbaudecke. Die Sichtschutzelemente 26, 28 sind über Rollen in der Gleitschiene 32 verschiebbar gelagert. Somit lässt sich die Sichtschutzeinheit 24 aus einer Verstauposition heraus in den ersten Bereich 10 verschieben.

Das zweite Sichtschutzelement 28 weist ein Haftelement 30 auf. Das Haftelement 30 ist dazu vorgesehen, in der zweiten Konfiguration mit der Türe 14 lösbar verbunden zu werden. Dabei ist das Haftelement 30 von einem Magneten gebildet. Es ist in diesem Zusammenhang jedoch auch denkbar, dass das Haftelement 30 auf eine andere, dem Fachmann als sinnvoll erscheinende Weise mit der Türe 14 verbunden wird, wie beispielsweise mit einer Schließleiste.

Durch das Öffnen der Türe 14 und dem Wegschwenken des Wandsegments 16 sind der erste Bereich 10 und der zweite Bereich 12 über eine Breite von etwa 78 cm miteinander verbunden. Ferner sind der erste Bereich 10 und der zweite Bereich 12 in Richtung des vorderen Bereichs 38 durch die Türe 14 und die Sichtschutzeinheit 24 blickdicht abgeschirmt. Der erste Bereich 10 und der zweite Bereich 12 bilden zusammen in der zweiten Konfiguration einen Ankleidebereich aus. Die dargestellte zweite Konfiguration umfasst somit eine Ankleidekonfiguration.

Um die Innenausbauvorrichtung von der zweiten Konfiguration zurück in die erste Konfiguration zu bringen, wird zunächst die Sichtschutzeinheit 24 zurück in die Verstauposition geschoben. Anschließend wird das Wandsegment 16 in die Verriegelungsposition bewegt und verriegelt. In einem letzten Schritt wird die Türe 14 wieder geschlossen. Dadurch ist der erste Bereich 10 wieder als Durchgangsbereich vollständig freigegeben. Der zweite Bereich 12 kann wieder als Sanitärbereich genutzt werden.

### Bezugszeichen

- 10: Bereich
- 12: Bereich
- 14: Türe
- 16: Wandsegment
- 18: Schließstück
- 20: Verriegelungselements
- 22: Wandsegmentbreite
- 24: Sichtschutzeinheit
- 26: Sichtschutzelement
- 28: Sichtschutzelement
- 30: Haftelement
- 32: Gleitschiene
- 34: Fahrzeug
- 36: Heckbereich
- 38: Bereich
- 40: Küchenbereich
- 42: Kochstelle
- 44: Spülbecken
- 46: Toilette
- 48: Dusche
- 50: Waschbecken
- 52: Trittstufe
- 54: Trittstufe
- 56: Schrank
- 58: Wandung
- 60: Wandung
- 62: Innenausbauboden
- 64: Griffbereich
- 66: Scharnier
- 68: Türbreite

## Patentansprüche

1. Innenausbauvorrichtung, insbesondere für einen Wohnwagen und/oder für ein Wohnmobil, die einen ersten Bereich (10), einen zweiten Bereich (12), zumindest eine Türe (14) und zumindest ein Wandsegment (16) aufweist, wobei das zumindest eine Wandsegment (16) und die zumindest eine Türe (14) den ersten Bereich (10) in zumindest einer ersten Konfiguration vom zweiten Bereich (12) trennen, **dadurch gekennzeichnet, dass** das zumindest eine Wandsegment (16) zur Herstellung zumindest einer zweiten Konfiguration beweglich ausgebildet ist.

2. Innenausbauvorrichtung nach Anspruch 1, **dadurch gekennzeichnet, dass** das zumindest eine Wandsegment (16) in der zumindest einen ersten Konfiguration mit der zumindest einen Türe (14) verbunden ist.

3. Innenausbauvorrichtung nach Anspruch 1 oder 2, **dadurch gekennzeichnet, dass** das zumindest eine Wandsegment (16) zumindest ein Schließstück (18) umfasst, das zur Aufnahme eines Verriegelungselements (20) der zumindest einen Türe (14) vorgesehen ist.

4. Innenausbauvorrichtung nach einem der vorhergehenden Ansprüche,
**dadurch gekennzeichnet, dass** das zumindest eine Wandsegment (16) eine Wandsegmentbreite (22) von maximal 40 cm umfasst.

5. Innenausbauvorrichtung nach einem der vorhergehenden Ansprüche, **dadurch gekennzeichnet, dass** das zumindest eine Wandsegment (16) schwenkbar ausgebildet ist.

6. Innenausbauvorrichtung nach einem der vorhergehenden Ansprüche, **dadurch gekennzeichnet, dass** das zumindest eine Wandsegment (16) in der zumindest einen zweiten Konfiguration zumindest zum Großteil innerhalb des zweiten Bereichs (12) angeordnet ist.

7. Innenausbauvorrichtung nach einem der vorhergehenden Ansprüche, **dadurch gekennzeichnet, dass** die zumindest eine Türe (14) in der zumindest einen zweiten Konfiguration zumindest zum Großteil innerhalb des ersten Bereichs (10) angeordnet ist.

8. Innenausbauvorrichtung nach einem der vorhergehenden Ansprüche, **gekennzeichnet durch** eine beweglich gelagerte Sichtschutzeinheit (24), die dazu vorgesehen ist, in der zumindest einen zweiten Konfiguration mit der zumindest einen Türe (14) verbunden zu werden.

9. Innenausbauvorrichtung nach Anspruch 8, **gekennzeichnet durch** zumindest eine Gleitschiene (32), in welcher die Sichtschutzeinheit (24) zumindest teilweise verschiebbar gelagert ist.

10. Innenausbauvorrichtung nach einem der vorhergehenden Ansprüche, **dadurch gekennzeichnet, dass** der erste Bereich (10) von einem Durchgangsbereich gebildet ist.

11. Innenausbauvorrichtung nach einem der vorhergehenden Ansprüche, **dadurch gekennzeichnet, dass** der zweite Bereich (12) von einem Sanitärbereich gebildet ist.

12. Innenausbauvorrichtung nach einem der vorhergehenden Ansprüche, **dadurch gekennzeichnet, dass** die zumindest eine zweite Konfiguration eine Ankleidekonfiguration umfasst.

13. Fahrzeug (34), insbesondere Wohnmobil oder Wohnwagen, mit einer Innenausbauvorrichtung nach einem der vorhergehenden Ansprüche.

14. Verfahren zur Änderung einer Konfiguration einer Innenausbauvorrichtung, insbesondere nach einem der Ansprüche 1 bis 12, wobei ein erster Bereich (10) von einem zweiten Bereich (12) in zumindest einer ersten Konfiguration von zumindest einem Wandsegment (16) und zumindest einer Türe (14) getrennt wird, **dadurch gekennzeichnet, dass** das zumindest eine Wandsegment (16) zur Herstellung zumindest einer zweiten Konfiguration bewegt wird.
